# DEMANDE DE BREVET EUROPEEN

(11) **EP 2 093 602 A1**
(43) Date de publication de la demande: **26.08.2009**
(21) Numéro de dépôt: 09153314.1
(22) Date de dépôt: 20.02.2009
(51) Int. Cl.: G02B 23/04, G02B 27/10

(54) **Dispositif d'imagerie à déflecteurs**

(30) Priorité: 25.02.2008 FR 0851186
(71) Demandeur: Astrium SAS, 75016 Paris (FR)
(72) Inventeur: Pasternak, Frédérick, 31590 Gaure (FR)
(74) Mandataire: Cabinet Plasseraud

(57) **Abrégé**

Un dispositif d'imagerie comprend des premiers déflecteurs (11, 12,...) qui produisent des déviations d'une direction de pointage (Z-Z) vers des parties de scène qui sont décalées (S1, S2,...), et des seconds déflecteurs (21, 22,...) qui regroupent sans superposition des images (31, 32,...) des dites parties de scène sur une surface de détection (SD) d'un détecteur d'image (4). Le dispositif peut comprendre aussi un système de balayage additionnel (6) et des filtres (5-1, 5-2,...), pour fournir en outre une information spectrale sur le rayonnement qui est issu des parties de scène. Un tel dispositif d'imagerie est particulièrement adapté pour être utilisé à bord d'un satellite d'observation de la Terre.

## Description

La présente invention concerne un dispositif d'imagerie à déflecteurs. Elle concerne aussi un procédé d'utilisation d'un tel dispositif à bord d'un satellite, pour acquérir des images de la Terre.

De nombreuses applications nécessitent d'acquérir des images de portions étendues de la surface de la Terre. Pour cela, des télescopes et/ou des objectifs qui possèdent un grand angle d'ouverture de champ d'entrée sont utilisés. Par exemple, un objectif qui possède un demi-angle d'ouverture du champ d'entrée de l'ordre de +/- 60 degrés permet d'obtenir une vue complète d'un côté de la Terre en une seule acquisition d'image, à partir d'une orbite de satellite à basse altitude. Mais la qualité d'une telle image correspondant à un large champ d'entrée peut être réduite, à cause de la quantité de rayonnement parasite qui est présente dans l'objectif. En effet, il est connu que cette quantité importante de rayonnement parasite est liée à la nature même d'objectif à large champ d'entrée, et augmente avec l'ouverture de ce champ d'entrée.

Un but de la présente invention consiste donc à fournir un nouveau dispositif d'imagerie qui permette d'acquérir une image contenant des informations recueillies dans des directions qui sont écartées, tout en produisant une quantité de rayonnement parasite qui soit réduite.

Un but supplémentaire de l'invention consiste à fournir un tel dispositif d'imagerie qui soit adapté pour être utilisé à bord d'un satellite.

Un autre but de l'invention consiste à fournir un dispositif d'imagerie qui permette d'acquérir d'une façon particulièrement efficace des vues d'un même point d'une scène sous des angles différents.

Un autre but encore de l'invention consiste à fournir un dispositif d'imagerie qui permette d'acquérir en outre une information sur la distribution spectrale du rayonnement qui est issu d'un point d'une scène dont une ou plusieurs images sont acquises.

Pour réaliser certains au moins de ces buts, l'invention propose un dispositif d'imagerie qui comprend :
- un télescope, disposé pour recevoir en entrée un rayonnement qui est produit par une scène externe au dispositif, et ayant un plan de formation d'image dans lequel des points d'images intermédiaires de parties de la scène sont destinés à être formés ;
- un diaphragme de champ, placé dans le plan de formation d'image du télescope ;
- un collimateur, disposé pour produire des faisceaux de rayonnement à partir de rayonnements qui sont issus respectivement des points d'images intermédiaires situés dans le plan de formation d'image du télescope ;
- un objectif, disposé pour produire des points d'une image qui est destinée à être détectée à partir des faisceaux de rayonnement qui sont produits par le collimateur ; et
- un détecteur d'image, ayant une surface de détection qui comprend une matrice d'éléments photosensibles, et disposé de sorte que l'objectif produise les points de l'image qui est destinée à être détectée sur cette surface de détection.

Le dispositif d'imagerie comprend en outre :
- un ensemble de plusieurs premiers déflecteurs qui sont disposés devant le télescope, d'un côté d'entrée du rayonnement dans celui-ci, et qui sont adaptés pour modifier chacun une direction de pointage du dispositif d'imagerie selon des déviations respectives différentes ; et
- un ensemble de seconds déflecteurs qui sont disposés au niveau d'images respectives des premiers déflecteurs à travers le télescope et le collimateur.

Autrement dit, un emplacement de second déflecteur est associé avec un emplacement de premier déflecteur selon une relation de conjugaison optique par le télescope et le collimateur.

Les premiers déflecteurs sont situés dans la pupille d'entrée du télescope, ou bien ils définissent cette pupille d'entrée lorsqu'ils limitent eux-mêmes transversalement la quantité de rayonnement qui entre dans le télescope. Les seconds déflecteurs sont alors dans une pupille intermédiaire du dispositif d'imagerie.

Le diaphragme de champ limite la partie de la scène qui est imagée sur la surface de détection.

En outre, les seconds déflecteurs sont chacun adaptés pour décaler sur la surface de détection, des parties d'image de la scène qui sont limitées chacune par le diaphragme de champ, et correspondent respectivement aux déviations de la direction de pointage qui sont produites par les premiers déflecteurs. Ces décalages sur la surface de détection sont sélectionnés pour ne créer aucune superposition entre deux parties d'image.

Grâce aux premiers déflecteurs qui sont disposés devant le télescope, ce dernier peut avoir une ouverture de champ d'entrée qui est faible. En effet, les directions dans lesquelles le rayonnement est reçu sont déterminées par les premiers déflecteurs, et ramenées par ceux-ci dans le champ d'entrée du télescope. Pour cette raison, l'ouverture du champ d'entrée du télescope peut être réduite, et la quantité de rayonnement parasite qui est produite dans le dispositif d'imagerie est diminuée en conséquence.

Chacun des premiers déflecteurs fixe une direction d'acquisition d'une portion d'image, avec un champ d'entrée élémentaire qui est réduit et déterminé par le diaphragme de champ. Cette direction d'acquisition est décalée angulairement par rapport à l'axe du télescope en fonction d'un ajustement de ce premier déflecteur. De cette façon, l'image qui est détectée par le détecteur lors d'une même prise de vue est une réunion d'images élémentaires de parties de la scène qui sont situées dans des directions respectives distinctes.

Les décalages angulaires qui sont produits par les premiers déflecteurs peuvent être importants. Notamment, ils peuvent être choisis pour être supérieurs à la valeur de l'ouverture commune des champs d'entrée élémentaires, qui est déterminée par le diaphragme de champ. Ainsi, l'image qui est détectée peut comprendre des parties d'image qui correspondent à des directions de visée vers la scène qui sont très écartées.

Les seconds déflecteurs ont pour fonction de positionner sur la surface de détection les parties d'image qui correspondent respectivement aux directions de visée fixées par les premiers déflecteurs. Ce positionnement est avantageusement effectué pour utiliser d'une façon optimale la surface de détection du détecteur d'image. En particulier, les seconds déflecteurs sont adaptés pour répartir les parties d'image sur la surface de détection sans provoquer de superposition. La fonction des seconds déflecteurs par rapport aux premiers déflecteurs résulte de la relation de conjugaison optique qui est prévue selon l'invention entre les deux ensembles de déflecteurs. Mais les déviations du rayonnement qui sont produites par les seconds déflecteurs n'ont pas de relation a priori avec les déviations qui sont produites par les premiers déflecteurs. En particulier, les déviations qui sont produites par les seconds déflecteurs peuvent être différentes de celles qui sont produites par les premiers déflecteurs.

Selon un premier perfectionnement de l'invention, le dispositif d'imagerie peut comprendre en outre un système de balayage additionnel, qui est disposé devant le télescope, du côté de l'entrée du rayonnement dans celui-ci. Ce système de balayage est adapté pour dévier la direction de pointage du dispositif d'imagerie, en plus des déviations qui sont produites par les premiers déflecteurs. Cette déviation supplémentaire qui est produite par le système de balayage peut être de préférence en dehors d'un plan de déviation commun aux premiers déflecteurs. Un tel système de balayage peut permettre d'augmenter la fauchée au sol lorsque le dispositif d'imagerie est utilisé à bord d'un satellite d'observation de la Terre. Dans le cadre de la présente invention, on appelle fauchée la portion totale de la surface de la Terre qui peut être imagée lors d'un même passage du satellite au dessus de cette portion de surface, éventuellement en combinant des images acquises successivement pendant ce passage du satellite. Au maximum, la fauchée peut comprendre une face complète de la Terre, lorsque sa largeur angulaire, vue du satellite, est supérieure au diamètre apparent de la Terre.

Selon un second perfectionnement de l'invention, plusieurs filtres peuvent être disposés dans le diaphragme de champ. De cette façon, des informations spectrales supplémentaires peuvent être recueillies lors d'une utilisation appropriée du dispositif d'imagerie, concernant le rayonnement qui est issu d'un même point de la surface de la Terre, ou plus généralement d'un même point de la scène dont une ou plusieurs images est (sont) prise(s).

L'invention propose aussi un procédé d'acquisition d'image de la Terre qui comprend les étapes suivantes :
- installer un dispositif d'imagerie tel que décrit précédemment à bord d'un satellite,
- placer le satellite sur une orbite au dessus de la Terre, et
- commander au moins une acquisition d'image en activant le détecteur d'image.

De cette façon, des images qui sont acquises successivement lors d'un passage unique du satellite au dessus d'une portion de la surface de la Terre peuvent couvrir une partie importante de cette portion.

Lorsqu'un système de balayage additionnel est prévu, la fauchée peut présenter une largeur qui est encore plus grande, voire supérieure au diamètre apparent de la Terre. Pour cela, le satellite est orienté de sorte que la direction de balayage du système de balayage soit perpendiculaire à la vitesse de défilement satellite.

Si le dispositif d'imagerie est pourvu en outre de plusieurs filtres, des images de la surface de la Terre qui correspondent à plusieurs longueurs d'onde peuvent être reconstruites à partir de plusieurs acquisitions réalisées lors d'un même passage du satellite. La comparaison entre de telles images associées à des longueurs d'onde de détection qui sont différentes, peut révéler des détails qui seraient peu visibles ou invisibles à partir d'un intervalle spectral de détection qui serait unique.

D'autres particularités et avantages de la présente invention apparaîtront dans la description ci-après d'exemples de réalisation non limitatifs, en référence aux dessins annexés, dans lesquels :
- la figure 1 est un schéma optique général d'un dispositif d'imagerie selon la présente invention ;
- les figures 2a à 2c illustrent plusieurs dispositions possibles des déflecteurs d'un dispositif d'imagerie conforme à l'invention ;
- la figure 3 est un schéma d'utilisation de la surface de détection pour un dispositif d'imagerie conforme à l'une des figures 2a à 2c ;
- les figures 4a et 4b illustrent une réalisation particulière d'un dispositif d'imagerie selon la présente invention ; et
- la figure 5 est un schéma de principe illustrant une utilisation d'un dispositif d'imagerie selon la présente invention à bord d'un satellite.

Pour raison de clarté, les dimensions qui ont été adoptées dans ces figures ne correspondent pas à des dimensions réelles ni à des rapports de dimensions réels. Des valeurs de certaines dimensions réelles sont données dans la suite, et l'Homme du métier pourra déduire les autres dimensions des connaissances générales du domaine de l'observation terrestre réalisée à partir d'un satellite.

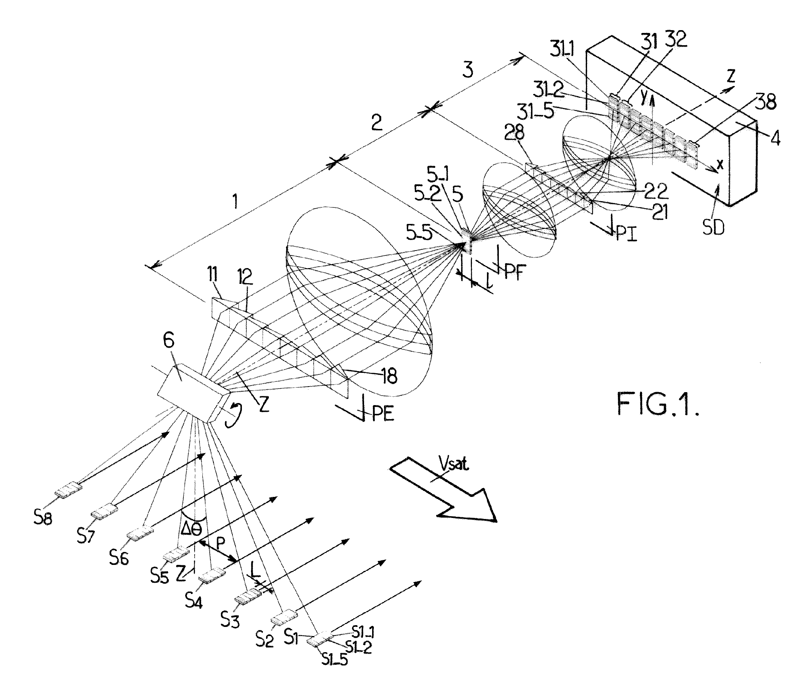

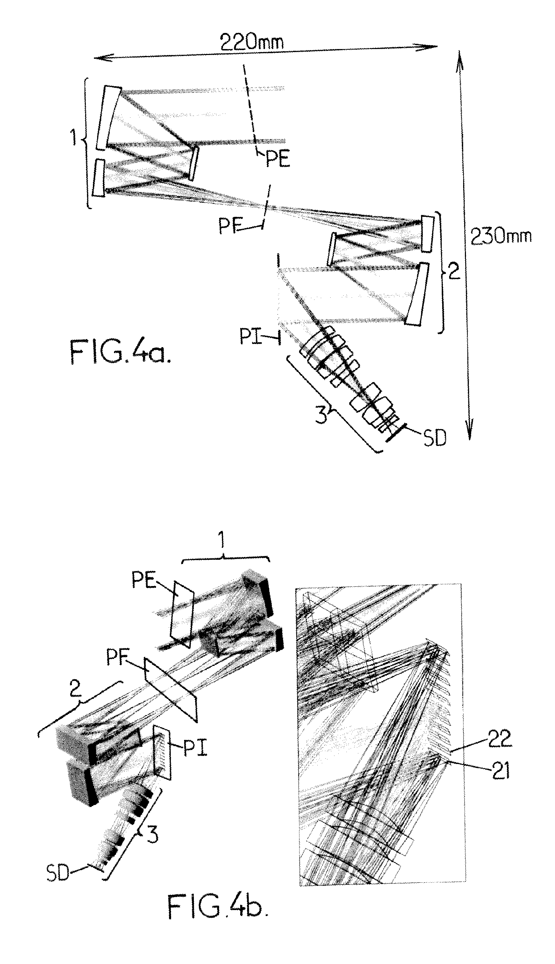

Dans le schéma de la figure 1, le télescope, le collimateur et l'objectif sont chacun représentés symboliquement sous forme d'une lentille convergente. Cette représentation est entièrement symbolique, et ces composants optiques peuvent posséder des structures individuelles complexes, comme cela est illustré par les figures 4a et 4b données à titre d'exemple.

Enfin, la réalisation de l'invention qui est décrite en détail dans la suite incorpore un système de balayage additionnel et plusieurs filtres qui sont disposés dans le diaphragme de champ. Mais ces composants ne sont pas obligatoires, et des réalisations simplifiées du dispositif d'imagerie peuvent être envisagées, qui sont dépourvues d'un tel système de balayage et/ou de tels filtres. L'Homme du métier saura alors sélectionner les fonctionnalités facultatives du dispositif d'imagerie qui nécessitent l'utilisation de l'un au moins de ces composants.

Dans ces figures, les références désignent les éléments optiques suivants :
1 : un télescope, d'un modèle de télescope qui peut être usuel, par exemple à deux ou trois miroirs ;
   PF : le plan focal image du télescope 1 ;
2 : un collimateur, qui peut être d'un modèle de collimateur usuel et qui est disposé de sorte que son plan focal objet coïncide avec le plan PF ;
3 : un objectif, qui peut être d'un modèle d'objectif usuel ;
4 : un détecteur d'image, qui peut être d'un modèle de détecteur usuel et qui est disposé de sorte que sa surface de détection SD coïncide avec le plan focal image de l'objectif 3 ;
5 : un diaphragme de champ ;
6 : un système de balayage ;
11 à 18 : premiers déflecteurs ;
21 à 28 : seconds déflecteurs ;
PE : la pupille d'entrée du télescope 1 ;
PI : une pupille intermédiaire, qui est conjuguée optiquement avec le plan PE à travers le télescope 1 et le collimateur 2 ; et
S1 à S8 : des parties d'une scène externe au dispositif d'imagerie, qui sont sélectionnées par le diaphragme de champ 5 et chacun des premiers déflecteurs 11 à 18 ;
31 à 38 : des parties d'image qui correspondent respectivement aux parties de scène S1 à S8 ;
5-1 à 5-5 : filtres ou polariseurs ; et
Z-Z : axe optique du dispositif d'imagerie, aussi appelé direction de pointage du dispositif d'imagerie.

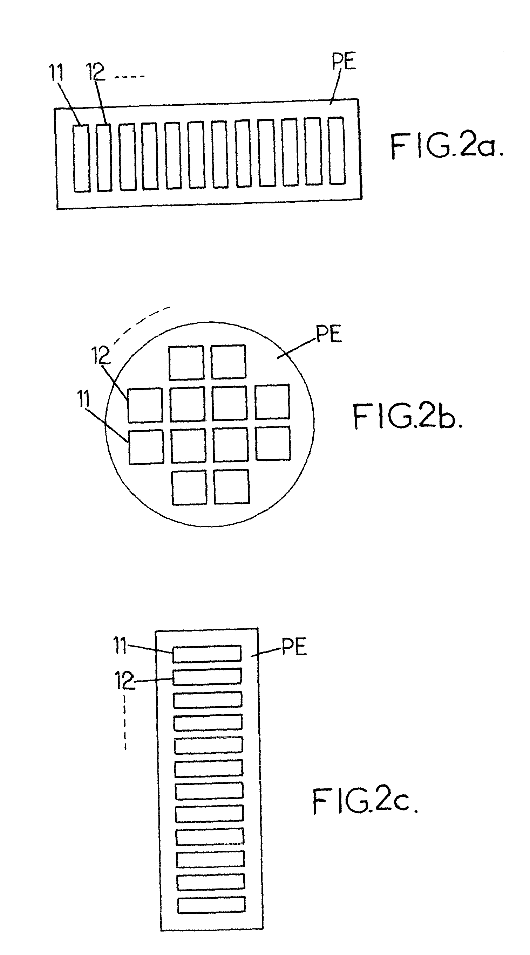

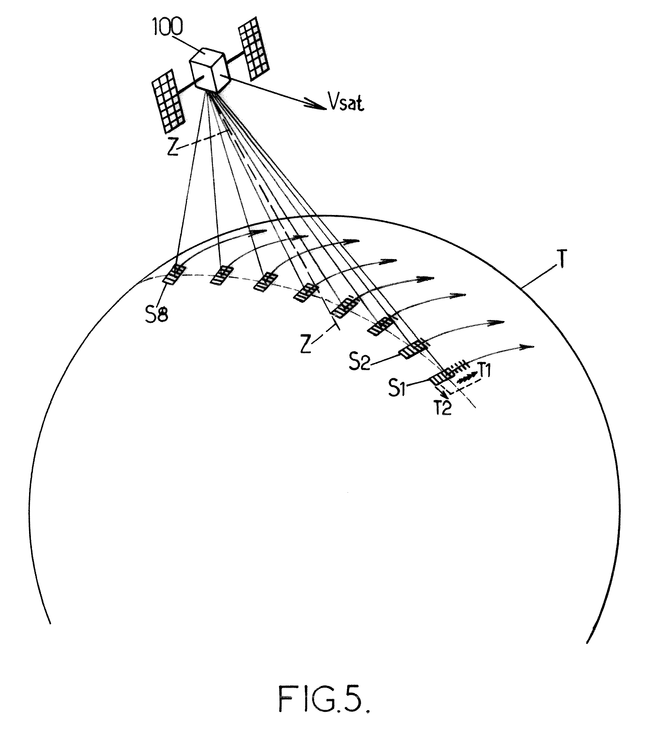

Les premiers déflecteurs 11 à 18 peuvent être des miroirs plans ou des prismes. Ils sont situés dans la pupille d'entrée PE. Dans ce cas notamment, les premiers déflecteurs 11 à 18 peuvent être alignés selon une direction qui est perpendiculaire à l'axe optique Z-Z du dispositif d'imagerie. A titre d'exemple, ils sont au nombre de huit pour le mode de réalisation particulier de l'invention qui est illustré par les figures 1 et 5, mais leur nombre peut être quelconque. Ils peuvent aussi être répartis de façon quelconque dans la pupille d'entrée PE, et les figures 2a - 2c illustrent trois répartitions possibles dans le cas de douze premiers déflecteurs. La répartition des premiers déflecteurs peut être choisie avantageusement en fonction du nombre, de la forme et des dimensions de ceux-ci, par rapport à la forme et aux dimensions de la pupille d'entrée PE. Pour la configuration de la figure 1, chaque premier déflecteur 11,..., 18 peut avoir la forme d'un carré, perpendiculairement à l'axe Z-Z.

Les premiers déflecteurs 11 à 18 dévient chacun différemment la direction de pointage du dispositif Z-Z. D'une façon générale, ces déviations ne sont pas liées aux positions des premiers déflecteurs 11 à 18 dans la pupille PE, mais elles sont fixées par les orientations de faces respectives de ceux-ci. Dans le jargon de l'Homme du métier, les premiers déflecteurs 11 à 18 forment un éclateur pupillaire.

En outre, des faces respectives des premiers déflecteurs 11 à 18 peuvent être orientées de façon que les déviations de la direction de pointage Z-Z produites par chacun d'eux soient situées dans un plan de déviation commun, et réparties dans ce plan de déviation avec un incrément entre des déviations successives. La figure 1 représente une configuration particulière du dispositif d'imagerie, selon laquelle la direction d'alignement des premiers déflecteurs 11 à 18 est parallèle au plan de déviation commun de ceux-ci. L'incrément de déviation des premiers déflecteurs 11 à 18 est noté Δθ. Cet incrément n'est pas nécessairement constant entre deux déviations successives dans l'ordre croissant de celles-ci.

Lorsque le dispositif d'imagerie est utilisé à bord d'un satellite qui est situé à une altitude d'environ 820 km (kilomètre), et lorsque Δθ est de l'ordre de 10° (degré), le dispositif d'imagerie vise simultanément, par l'intermédiaire des premiers déflecteurs 11 à 18, des points de la surface de la Terre qui sont alignés dans le plan de déviation commun avec un pas P d'environ 150 km. En fait, à cause de la rotondité de la Terre, ce pas est en général variable pour des déviations produites par des premiers déflecteurs qui sont différents.

Les seconds déflecteurs 21 à 28 sont appariés, ou conjugués, optiquement un à un avec les premiers déflecteurs 11 à 18 à travers le télescope 1 et le collimateur 2. Pour cette raison, ils sont situés dans la pupille intermédiaire PI et chacun des seconds déflecteurs 21 à 28 est superposé à une image qui est formée par le télescope 1 et le collimateur 2 d'un des premiers déflecteurs 11 à 18. Eventuellement, deux premiers déflecteurs peuvent être séparés par un intervalle de sécurité dans la pupille d'entrée PE, par exemple de 1 mm (millimètre), pour éviter des chevauchements involontaires de leurs images dans la pupille intermédiaire PI. Avantageusement, la forme de chaque second déflecteur 21,..., 28 dans la pupille intermédiaire PI peut correspondre à la forme de l'image du premier déflecteur 11,... , 18 correspondant.

Chaque second déflecteur 21,..., 28 a pour fonction de décaler, sur la surface de détection SD, un point image qui correspond à la déviation de la direction de pointage Z-Z qui est produite par le premier détecteur conjugué avec lui. En outre, d'une façon qui est analogue aux premiers déflecteurs 11 à 18 dans la pupille PE, les décalages d'image qui sont produits par les seconds déflecteurs 21 à 28 n'ont pas de relation avec les positions respectives de ces seconds déflecteurs dans la pupille intermédiaire PI. Ainsi, les décalages d'image qui sont produits par les seconds déflecteurs 21 à 28 peuvent être sélectionnés pour utiliser de façon optimale la surface de détection SD, mais chacun de ces décalages peut être individuellement quelconque par rapport à la déviation de la direction de pointage Z-Z qui est produite par le premier déflecteur correspondant. Sur la figure 1, les seconds déflecteurs 21 à 28 ont des faces respectives qui sont orientées de façon à aligner les parties d'image de la scène qui correspondent respectivement aux déviations de la direction Z-Z produites par les premiers déflecteurs 11 à 18. Cet alignement des parties d'image est aussi parallèle à des décalages d'image sur la surface de détection SD, qui sont équivalents aux déviations produites par les premiers déflecteurs 11 à 18. Dans ces conditions, le dispositif d'imagerie réalise un resserrement du pas P sur la surface de déviation SD.

Le diaphragme de champ 5 est placé dans le plan focal PF du télescope 1. Pour chaque couple de premier et de second déflecteurs appariés, le diaphragme 5 limite la partie de la scène qui est imagée par le dispositif d'imagerie. Ainsi, sur la figure 1, S1 est la partie de la scène qui est imagée via les déflecteurs 11 et 21 pour produire la partie d'image 31, S2 est la partie de la scène qui est imagée via les déflecteurs 12 et 22 pour produire la partie d'image 32, etc. Les dimensions du diaphragme 5 permettent de limiter chaque partie d'image 31,..., 38, de sorte que ces parties d'image peuvent être réparties sans superposition sur la surface de détection SD. Avantageusement, les décalages qui sont produits par les seconds déflecteurs 21 à 28 peuvent être ajustés pour que deux parties d'image 31 à 38 qui sont adjacentes présentent entre elles des bandes de séparation, pour s'affranchir de phénomènes parasites tels que la diffraction le long des bords du diaphragme 5.

Autrement dit, le diaphragme 5, avec chaque couple de premier et second déflecteurs appariés, forme une voie d'imagerie distincte. Ces voies d'imagerie correspondent à des directions de visée dans la scène qui sont séparées de l'incrément Δθ, et les parties d'image correspondantes sont resserrées sur la surface de détection SD pour pouvoir être acquises simultanément, lors d'une même prise de vue. Dans les conditions d'utilisation à bord d'un satellite qui ont déjà été citées, la largeur I du diaphragme de champ 5, parallèlement au plan de déviation commun des premiers déflecteurs 11 à 18, peut être sélectionnée de sorte que chaque partie d'image associée à une voie d'imagerie distincte corresponde à une partie de la surface de la Terre qui a une largeur L.

La surface de détection SD est formée d'éléments photosensibles séparés, aussi appelés pixels. Le détecteur 4 peut alors être orienté de sorte que les parties d'image qui correspondent aux différentes voies d'imagerie soient alignées parallèlement au grand côté de la surface de détection SD (direction x). Dans ces conditions, chaque partie d'image 31,...,38 est une bande de nₓ x n_{y} pixels sur la surface SD, et correspond à une bande de la surface de la Terre d'environ nₓ.p.H/F x n_{y}.p.H/F, où p est la dimension de chaque pixel, H est l'altitude du satellite, et F la longueur focale du dispositif d'imagerie. En outre, deux parties d'image qui sont adjacentes sur la surface de détection SD peuvent être séparées par une ou plusieurs colonnes de pixels, qui ne sont pas utilisés pour acquérir un signal.

A titre d'exemple, l'altitude H du satellite peut être égale à 820 km (kilomètre), et la dimension p des pixels peut être égale à 50 µm (micromètre).

Lorsque plusieurs filtres sont disposés en outre dans le diaphragme de champ 5, ils réalisent une division de chaque partie d'image 31,..., 38, qui est identique pour toutes les parties d'image. Ainsi, au sein de chaque partie d'image 31,..., 38, une première sous-partie de celle-ci correspond à un rayonnement qui est filtré par un premier filtre 5-1, une deuxième sous-partie correspond à un rayonnement qui est filtré par un deuxième filtre 5-2, etc. Une disposition avantageuse dans le diaphragme de champ 5 consiste à aligner les filtres perpendiculairement aux décalages d'image intermédiaire dans le plan PF qui sont équivalents aux déviations produites par les premiers déflecteurs 11 à 18 (voir figure 1). Dans ce cas, la division de l'ouverture du diaphragme 5 par les filtres 5-1, 5-2,..., 5-5 produit une division de chaque partie de scène S1 à S8 perpendiculairement au plan de déviation commun des premiers déflecteurs 11 à 18. Ainsi, la partie de scène S1 est divisée en sous-parties S1-1, S1-2,..., S1-5. Simultanément, la partie d'image 31 correspondante est elle-même divisée en sous-partie d'image 31-1, 31-2,..., 31-5, le long de la direction y de la surface de détection SD.

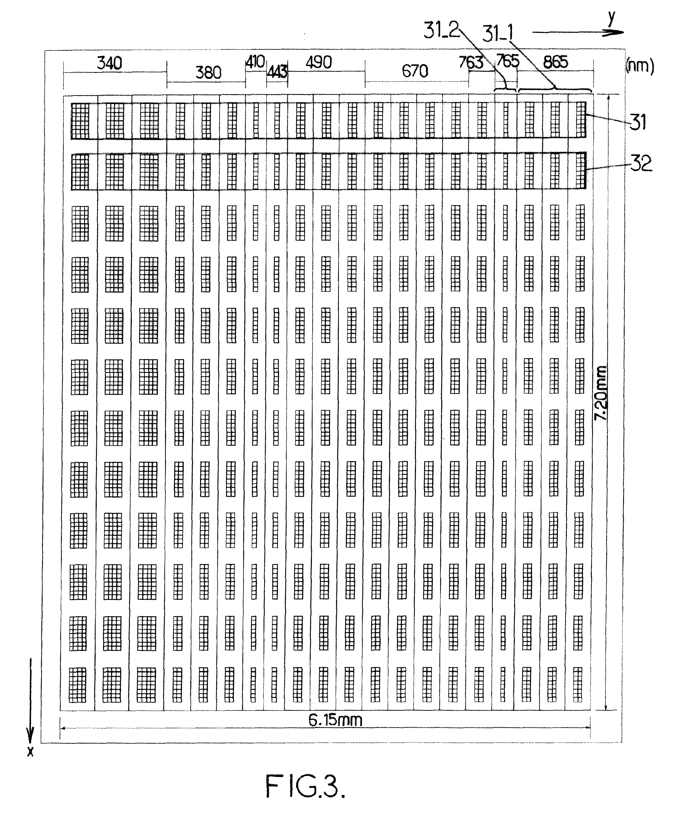

Autrement dit, la disposition de filtres dans le diaphragme 5 correspond, par conjugaison optique à travers le collimateur 2, les seconds déflecteurs 21,..., 28 et l'objectif 3, à des bandes sur la surface de détection SD qui sont associées à des longueurs d'onde de détection différentes. Ces bandes associées à des longueurs d'onde de détection différentes, parallèles à la direction x, coupent chaque bande de partie d'image, parallèle à la direction y, en définissant dans cette dernière des sous-parties d'image qui sont associés à des longueurs d'onde différentes. La figure 3 représente une telle division de la surface de détection SD, pour des ensembles de premiers déflecteurs et de seconds déflecteurs qui comprennent chacun 12 déflecteurs, et pour 9 filtres utilisés. Sur cette figure, les directions x et y de la surface SD qui ont été introduites plus haut sont reportées, les deux premières parties d'image 31 et 32 sont indiquées, ainsi que les deux premières sous-parties 31-1 et 31-2 de la partie d'image 31. Les longueurs d'onde de filtrage qui correspondent aux sous-parties d'image sont aussi indiquées le long de la direction y. Elles sont réparties entre 340 et 865 nm (nanomètre). Chaque carré élémentaire représente un pixel de la surface de détection SD. De plus, deux parties d'image adjacentes (par exemple 31 et 32) sont séparées par quatre pixels non utilisés selon la direction x, et deux bandes qui sont associées à des longueurs d'onde différentes sont aussi séparées par quatre pixels non utilisés, selon la direction y. Pour raison de clarté, ces pixels non utilisés ne sont pas représentés sur la figure 3.

En outre, la figure 3 montre une possibilité de regroupement de pixels contigus parallèlement à la direction y, pour obtenir un rapport signal sur bruit qui permette une bonne détection. Un tel regroupement peut être réalisé en mode de retard-sommation, connu sous la désignation TDI («Time Delay Integration» en anglais) pour un détecteur d'images. Il peut être réalisé de façon analogique au niveau de la matrice du détecteur 4, ou de façon numérique lors du traitement du signal d'image qui a été mémorisé.

Avantageusement, le dispositif d'imagerie peut être pourvu en outre d'un système de balayage additionnel 6 (figure 1). Ce système de balayage 6 est disposé devant le télescope 1, du côté d'entrée du rayonnement dans celui-ci. Selon un mode de réalisation préféré, il peut comprendre un miroir plan pivotant. Il permet de dévier la direction de pointage Z-Z du dispositif d'imagerie, en plus des déviations qui sont produites par les premiers déflecteurs 11, 12,.... En particulier, la déviation qui est produite par le système de balayage 6 peut être perpendiculaire au plan de déviation commun des premiers déflecteurs 11, 12,.... Ainsi, lorsque les parties d'image 31, 32,... sont chacune divisées en sous-parties associées à des longueurs d'onde filtrées qui sont différentes, une variation du système de balayage 6 peut permettre de passer, pour une même sous-partie de la scène, d'une sous-partie d'image qui est associée à une longueur d'onde à une autre sous-partie d'image qui est associée à une autre longueur d'onde. Chaque position du système de balayage 6 correspond à une nouvelle acquisition d'image, de sorte que chaque sous-partie de la scène peut être imagée successivement pour chaque longueur d'onde filtrée, à travers le filtre correspondant.

Les figures 4a et 4b illustrent une même réalisation particulièrement compacte d'un dispositif d'imagerie selon l'invention. Des dimensions globales du dispositif sont 230 mm x 220 mm. Pour raison de clarté, seuls les composants optiques du dispositif qui déterminent ces dimensions par leur encombrement sont représentés sur ces deux figures, mais l'Homme du métier saura restituer les autres composants optiques à l'aide de la figure 1. Le télescope 1 est d'un modèle à trois miroirs, de même que le collimateur 2. Ces réalisations à base de miroirs permettent de supprimer des effets chromatiques que pourraient produire des réalisations alternatives du télescope et du collimateur qui comprendraient des interfaces réfractives. L'objectif 3 est constitué d'une succession de lentilles. Eventuellement, l'objectif 3 peut être limité à un fonctionnement dans l'intervalle du rayonnement visible. Dans ce cas, deux objectifs complémentaires qui ne sont pas représentés peuvent être disposés en parallèle avec l'objectif 3, et être dédiés respectivement au rayonnement proche-ultraviolet et au rayonnement proche-infrarouge. L'homme du métier sait comment disposer de telles voies optiques en parallèle, de sorte qu'il n'est pas utile d'en détailler plus la réalisation ni l'agencement ici. Selon cette réalisation particulière du dispositif d'imagerie, les premiers déflecteurs qui sont placés dans la pupille d'entrée PE sont des petits miroirs qui n'ont pas été représentés, par exemple douze miroirs. Les seconds déflecteurs qui sont placés dans la pupille intermédiaire PI sont également des miroirs.

On décrit maintenant un premier mode d'utilisation d'un dispositif d'imagerie selon l'invention, avec plusieurs filtres et un système de balayage additionnel, à bord d'un satellite. La figure 5 montre le satellite, qui est référencé 100, et qui se déplace au dessus de la surface de la Terre T avec une vitesse notée Vsat. Vsat détermine la direction d'azimut du satellite 100. Selon ce premier mode d'utilisation, le dispositif d'imagerie est orienté à bord du satellite 100 de sorte que les déviations de la direction de pointage Z-Z qui sont produites par les premiers déflecteurs 11 à 18 soient parallèles à la direction d'azimut. Autrement dit, le plan de déviation commun des premiers déflecteurs est parallèle à la direction d'azimut. La flèche Vsat qui indique la direction d'azimut est aussi reportée sur la figure 1 pour faciliter la compréhension de l'orientation du dispositif d'imagerie. Dans ces conditions, les parties de scène S1 à S8 qui sont photographiées lors d'une même prise de vue sont décalées parallèlement à la trace au sol du déplacement du satellite 100. Des variations successives du système de balayage additionnel 6 entre des prises de vues successives décalent les parties de la surface de la Terre qui sont photographiées selon le vecteur T1. Pour obtenir une information spectrale maximale sur chaque point de la surface de la Terre qui est photographié, la longueur du vecteur T1 correspond avantageusement à la largeur de chaque sous-partie d'image parallèlement à la direction y sur la surface de détection SD. En outre, une durée peut être prévue entre deux balayages successifs du système de balayage 6 perpendiculairement à la direction d'azimut, qui est adaptée pour que ces balayages soient décalés du vecteur T2 à la surface de la Terre. Le décalage du vecteur T2 est avantageusement produit par le déplacement du satellite 100 sur son orbite, de sorte qu'il est parallèle à la direction d'azimut, c'est-à-dire à Vsat. Dans ces conditions supplémentaires, un même point à la surface de la Terre apparaît avec des déviations qui sont produites par deux premiers déflecteurs différents, respectivement dans deux images qui sont enregistrées lors de cycles successifs de balayage du système de balayage 6.

Un second mode d'utilisation à bord d'un satellite est plus particulièrement adapté lorsque le dispositif d'imagerie n'est pas pourvu de système de balayage 6. Selon ce second mode d'utilisation, le dispositif d'imagerie est orienté à bord du satellite 100 de sorte que les déviations de la direction de pointage Z-Z qui sont produites par les premiers déflecteurs soient perpendiculaires à la direction d'azimut. Dans ce cas, les premiers déflecteurs peuvent être éventuellement adaptés pour imager des parties de la surface de la Terre qui sont contiguës. Autrement dit, l'incrément Δθ de déviation des premiers déflecteurs 11 à 18 peut être sélectionné de sorte que le pas P soit sensiblement égal à la largeur L de chaque partie de surface de la Terre S1,..., S8. Les prises de vues successives peuvent alors être décalées en fonction du déplacement du satellite 100 le long de son orbite.

Ces deux modes d'utilisation permettent d'obtenir des fauchées qui sont continues et larges, sans qu'il soit nécessaire de modifier l'attitude du satellite.

Il est bien entendu que l'invention peut être mise en oeuvre en introduisant des modifications dans les modes de réalisation qui ont été décrits en détail ci-dessus, tout en conservant certains au moins des avantages qui ont été cités. Ces modifications peuvent concerner notamment les valeurs numériques qui ont été citées à titre d'exemples, ainsi que les nombres de déflecteurs et de filtres. A toutes fins utiles, il est rappelé seulement que l'invention propose de réaliser un éclatement pupillaire du champ d'entrée, et de resserrer les différentes directions de prise de vues sur la surface du détecteur d'image. De cette façon, la quantité de lumière parasite qui est présente dans le dispositif d'imagerie est réduite.

## Revendications

1. Dispositif d'imagerie comprenant :
- un télescope (1) disposé pour recevoir en entrée un rayonnement produit par une scène externe audit dispositif, et ayant un plan de formation d'image (PF) dans lequel des points d'images intermédiaires de parties de ladite scène sont destinés à être formés ;
- un diaphragme de champ (5) placé dans le plan de formation d'image du télescope ;
- un collimateur (2) disposé pour produire des faisceaux de rayonnement à partir de rayonnements issus respectivement des points d'images intermédiaires situés dans le plan de formation d'image du télescope ;
- un objectif (3) disposé pour produire des points d'une image destinée à être détectée à partir des faisceaux de rayonnement produits par le collimateur ; et
- un détecteur d'image (4) ayant une surface de détection (SD) comprenant une matrice d'éléments photosensibles, ledit détecteur étant disposé de sorte l'objectif produise les points de l'image destinée à être détectée sur ladite surface de détection,
ledit dispositif d'imagerie comprenant en outre :
- un ensemble de plusieurs premiers déflecteurs (11, 12,...) disposés devant le télescope (1) dans une pupille d'entrée (PE) dudit télescope, d'un côté d'entrée du rayonnement dans ledit télescope, lesdits premiers déflecteurs étant adaptés pour modifier chacun une direction de pointage (Z-Z) du dispositif d'imagerie selon des déviations respectives différentes ; et
- un ensemble de seconds déflecteurs (21, 22,...) disposés au niveau d'images respectives des premiers déflecteurs à travers le télescope (1) et le collimateur (2), de sorte qu'un emplacement de second déflecteur est associé avec un emplacement de premier déflecteur selon une relation de conjugaison optique par ledit télescope et ledit collimateur,
lesdits seconds déflecteurs (21, 22,...) étant chacun adaptés pour décaler sur la surface de détection (SD), des parties d'image (31, 32,...) de la scène limitées chacune par le diaphragme de champ (5) et correspondant respectivement aux déviations de la direction de pointage produites par les premiers déflecteurs (11, 12,...), sans superposition entre deux des dites parties d'image.

2. Dispositif selon la revendication 1, dans lequel les premiers déflecteurs (11, 12,...) sont des miroirs plans ou des prismes.

3. Dispositif selon la revendication 1 ou 2, dans lequel les seconds déflecteurs (21, 22,...) sont des miroirs plans ou des prismes.

4. Dispositif selon l'une quelconque des revendications précédentes, dans lequel les premiers déflecteurs (11, 12,...) sont alignés selon une direction perpendiculaire à un axe optique dudit dispositif.

5. Dispositif selon l'une quelconque des revendications précédentes, dans lequel les premiers déflecteurs (11, 12,...) ont des faces respectives orientées de façon que les déviations de la direction de pointage (Z-Z) du dispositif soient situées dans un plan de déviation commun et réparties dans ledit plan de déviation commun avec un incrément (Δθ).

6. Dispositif selon les revendications 4 et 5, dans lequel la direction d'alignement des premiers déflecteurs (11, 12,...) est parallèle au plan de déviation commun desdits premiers déflecteurs.

7. Dispositif selon la revendication 5 ou 6, dans lequel l'incrément de déviation (Δθ) de la direction de pointage associé aux premiers déflecteurs (11, 12,...) est compris entre 3 degrés et 15 degrés.

8. Dispositif selon l'une quelconque des revendications 5 à 7, dans lequel les seconds déflecteurs (21, 22,...) ont des faces respectives orientées de façon à aligner les parties d'image de la scène (31, 32,...) correspondant respectivement aux déviations de la direction de pointage produites par les premiers déflecteurs (11, 12,...), parallèlement à des décalages d'image sur la surface de détection (SD), équivalents aux déviations produites par lesdits premiers déflecteurs.

9. Dispositif selon l'une quelconque des revendications 5 à 8, comprenant en outre un système de balayage additionnel (6), disposé devant le télescope (1), du côté de l'entrée du rayonnement dans ledit télescope, et adapté pour dévier la direction de pointage (Z-Z) du dispositif d'imagerie, en plus des déviations produites par les premiers déflecteurs (11, 12,...).

10. Dispositif selon la revendication 9, dans lequel le système de balayage additionnel (6) est adapté pour dévier la direction de pointage (Z-Z) du dispositif d'imagerie perpendiculairement au plan de déviation commun des premiers déflecteurs (11, 12,...).

11. Dispositif selon la revendication 9 ou 10, dans lequel le système de balayage additionnel (6) comprend un miroir plan pivotant.

12. Dispositif selon l'une quelconque des revendications précédentes, comprenant en outre plusieurs filtres (5-1, 5-2,... ) disposés dans le diaphragme de champ (5).

13. Dispositif selon la revendication 12, dans lequel les filtres (5-1, 5-2,...) sont alignés dans le diaphragme de champ (5), perpendiculairement à des décalages d'image intermédiaire dans le plan de formation d'image du télescope (PF), équivalents aux déviations produites par les premiers déflecteurs (11, 12,...).

14. Procédé d'acquisition d'image de la Terre comprenant les étapes suivantes :
- installer un dispositif d'imagerie selon l'une quelconque des revendications précédentes à bord d'un satellite (100),
- placer le satellite (100) sur une orbite au dessus de la Terre, et
- commander au moins une acquisition d'image en activant le détecteur d'image (4).

15. Procédé selon la revendication 14, suivant lequel le satellite (100) se déplace au dessus de la surface de la Terre selon une direction d'azimut (Vsat), et suivant lequel le dispositif d'imagerie est orienté de sorte que les déviations de la direction de pointage dudit dispositif produites par les premiers déflecteurs (11, 12,...) soient parallèles à la direction d'azimut.

16. Procédé selon la revendication 15, suivant lequel plusieurs images sont enregistrées successivement, de sorte qu'un même point à la surface de la Terre apparaisse dans deux des dites images respectivement avec des déviations produites par deux premiers déflecteurs (11, 12,...) différents.
